# EUROPÄISCHE PATENTSCHRIFT

(11) **EP 3 326 333 B1**
(45) Veröffentlichungstag und Bekanntmachung des Hinweises auf die Patenterteilung: **07.08.2019**
(21) Anmeldenummer: 16727675.7
(22) Anmeldetag: 02.06.2016
(51) Int. Cl.: H04L 12/40

(54) **BUSSYSTEM, TEILNEHMERSTATION DAFÜR UND VERFAHREN ZUR KONFIGURATION EINES STATISCHEN BUSSYSTEMS FÜR EINE DYNAMISCHE KOMMUNIKATION**
BUS SYSTEM, SUBSCRIBER STATION THEREFOR AND METHOD FOR CONFIGURING A STATIC BUS SYSTEM FOR A DYNAMIC COMMUNICATION
SYSTÈME DE BUS, STATION D'ABONNÉ POUR CELUI-CI ET PROCÉDÉ DE CONFIGURATION D'UN SYSTÈME DE BUS STATIQUE POUR UNE COMMUNICATION DYNAMIQUE

(30) Priorität: 17.07.2015 DE 102015213522
(43) Veröffentlichungstag der Anmeldung: 30.05.2018
(73) Patentinhaber: Robert Bosch GmbH, 70442 Stuttgart (DE)
(72) Erfinder: HEINZ, Thomas, 70469 Stuttgart (DE); AMARNATH, Rakshith, 71679 Asperg (DE); SZERWINSKI, Robert, 70563 Stuttgart (DE); SCHWEIZER, Markus, 71665 Vaihingen/Enz (DE); HAENGER, Jochen Ulrich, 74382 Neckarwestheim (DE)
(86) Internationale Anmeldenummer: PCT/EP2016/062469
(87) Internationale Veröffentlichungsnummer: WO 2017/012762

(56) Entgegenhaltungen:
- EP-A1- 2 800 316
- EP-A1- 2 822 227
- Scott Monroe ET AL: "Solutions of CAN and CAN FD in a mixed network topology", , 13. November 2013 (2013-11-13), XP055218947, Gefunden im Internet: URL:http://www.can-cia.org/fileadmin/resou rces/documents/proceedings/2013_monroe.pdf [gefunden am 2015-10-07]

## Beschreibung

### Stand der Technik

In Fahrzeugen, wie Kraftfahrzeugen, Lastkraftfahrzeugen, usw. sind zwischen verschiedenen Steuergeräten für beispielsweise ein Bremsunterstützungssystem, eine Scheibenwaschanlage, eine Klimaanlage usw. untereinander und/oder mit Sensoren Informationen auszutauschen. Dieser Austausch erfolgt in Form von Daten mit Hilfe von Kommunikationssystemen, die in Bezug auf Fahrzeuge auch als automobile Kommunikationssysteme bezeichnet werden.

Heute werden automobile Kommunikationssysteme mittels verschiedener Bussysteme aufgebaut, in welchen die Daten in Nachrichten oder Rahmen verpackt übertragen werden. Unter anderem kommen als Bussysteme CAN, CAN-FD, FlexRay und in Zukunft automotive Ethernet zum Einsatz. Ein Bussystem besteht dabei aus der Kommunikationssoftware auf einem Steuergerät oder Sensor oder Anzeigeeinheit oder Aktuator oder einer beliebigen anderen Einheit, die an das Bussystem angeschlossen ist und mit diesem Informationen austauscht, als Teilnehmerstation des Bussystems, der Kommunikationshardware auf dem Steuergerät, Sensor, Anzeigeeinrichtung oder Aktuator oder einer beliebigen anderen Einheit, die an das Bussystem angeschlossen ist und mit diesem Informationen austauscht, usw. als Teilnehmerstation des Bussystems und den Datenleitungen zur Verbindung der Teilnehmerstationen miteinander.

Die veröffentlichte Patentanmeldung EP2822227 offenbart ein CAN-FD-Kommunikationsnetzwerk, wobei die Architektur eines herkömmlichen CAN-Busteilnehmers in gemischten Netzwerken, d.h. Netzwerke mit CAN- und CAN-FD-Busteilnehmern, weiter verwendet werden kann.

Die Bussysteme zeichnen sich derzeit dadurch aus, dass die übermittelbaren Information(en) zum Zeitpunkt des in Verkehr Bringens eines neuen Fahrzeugs bekannt sind. Dieses Bekanntsein betrifft die Sender der Information(en), die Empfänger der Information(en) und die Darstellung der Information(en) auf dem Bussystem. Die Daten, welche die zu übermittelnden oder übertragenden Information(en) beschreiben, werden auch als Konfiguration bezeichnet. Die Konfiguration ist Teil der Kommunikationssoftware des Bussystems.

Aufgrund der Tatsache, dass die zu übermittelnden Information(en) zum Zeitpunkt des in Verkehr Bringens eines neuen Fahrzeugs bekannt ist/sind, ist die Kommunikationssoftware in den Teilnehmerstationen des Bussystems statisch aufgebaut. Das heißt, die Kommunikationssoftware kann nur die Information(en) verarbeiten, welche zum Zeitpunkt des in Verkehr Bringens des neuen Fahrzeugs bekannt war(en).

Darüber hinaus ist die Identifikation der Information auf den Datenleitungen ebenfalls statisch zugeordnet. Für diese Identifikation werden je nach Bussystem die Identifizierer einer über den Bus gesendeten Nachricht, die auch Frame-Identifier genannt werden, Zykluszähler (Cycle-Counter) oder Anschlussadressen (Port-Adressen) verwendet.

Nach dem in Verkehr Bringens eines neuen Fahrzeugs kann die Konfiguration der Kommunikation derzeit nur noch geändert werden durch ein Software-Update, durch die Auswahl einer anderen, bereits in der Teilnehmerstation des Bussystems vorhandenen Konfiguration und/oder in geringem Umfang durch die Änderung des Frame-Identifier von Informations-Paketen, welche statisch vorhanden sind. Eine solche statische Konfiguration der Kommunikation ist im Zuge der sich immer dynamischer ändernden Kommunikationsanforderungen ein großer Nachteil.

Es besteht also der Bedarf nach einer dynamischen Kommunikation, um den großen Aufwand zu reduzieren, der mit den vorhandenen statischen Bussystemen zum Kommunizieren von Informationen erforderlich ist, welche zum Zeitpunkt des in Verkehr Bringens eines neuen Fahrzeugs nicht bekannt sind.

### Offenbarung der Erfindung

Daher ist es Aufgabe der vorliegenden Erfindung, ein Bussystem, eine Teilnehmerstation dafür und ein Verfahren zur Konfiguration eines statischen Bussystems für eine dynamische Kommunikation bereitzustellen, welches Bussystem, Teilnehmerstation und Verfahren die zuvor genannten Probleme lösen. Insbesondere sollen ein Bussystem, eine Teilnehmerstation und ein Verfahren bereitgestellt werden, bei welchen mit geringem Aufwand ohne Einbußen bei den Kommunikationseigenschaften des Bussystems eine dynamische Kommunikation in einem Bussystem ermöglicht wird.

Die Aufgabe wird durch ein Bussystem mit den Merkmalen des Anspruchs 1 gelöst. Das Bussystem hat mindestens zwei Teilnehmerstationen, eine Kommunikationsverbindung zur Verbindung der mindestens zwei Teilnehmerstationen miteinander, und mindestens eine Einrichtung zur dynamischen Kommunikation zwischen den mindestens zwei Teilnehmerstationen des Bussystems, wobei die mindestens zwei Teilnehmerstationen und die Kommunikationsverbindung ausgestaltet sind zur statischen Kommunikation, die auf in dem Bussystem zu übermittelnde Nachrichten ausgerichtet ist, die bei Bereitstellen des Bussystems bekannt sind und entsprechend festgelegten Sendern und Empfängern konfiguriert sind, und wobei die dynamische Kommunikation auf in dem Bussystem zu übermittelnde Nachrichten ausgerichtet ist, die erst nach Bereitstellen der mindestens zwei Teilnehmerstationen und der Kommunikationsverbindung bekannt sind und entsprechend festgelegten Sendern und Empfängern konfiguriert sind.

Das Bussystem ermöglicht eine dynamische Kommunikation unter Weiterverwendung der bisher verwendeten, statischen Kommunikationssoftware. Die Konfiguration der Kommunikationssoftware muss dabei nicht verändert werden. Dennoch ist es möglich, nahezu beliebige Informationen in dem Bussystem kommunizieren zu können. Dadurch werden die bisherigen Merkmale von Bussystemen, die Kommunikation nach dem in Verkehr Bringen eines Autos zu ändern, stark erweitert.

Das Bussystem vereinfacht und beschleunigt die Einführung von dynamischer Kommunikation, so wie es für die Vernetzung eines Fahrzeugs mit dem Internet, der aufkommenden Car2X-Kommunikation und der Einführung von Anwender-Softwareprogrammen, die auch kurz Apps genannt werden, für beliebige Teilnehmerstationen des Bussystems, wie beispielsweise Steuergeräte, notwendig ist. Dadurch können in dem Bussystem nahezu beliebige Informationen kommuniziert werden, auch wenn die Informationen bei der Inbetriebnahme des Bussystems, beispielsweise bei einem in Verkehr Bringens eines neuen Fahrzeugs, einer Inbetriebnahme des Bussystems bei Erstbezug eines Gebäudes, usw., nicht bekannt sind.

Das Bussystem ermöglicht im Weiteren Kommunikations-Ressourcen mit hoher Priorität bevorzugt gegenüber Kommunikations-Ressourcen mit geringerer Priorität zu verwenden. Das führt zu einer optimalen Ausnutzung der Busbandbreite, z.B. beim FlexRay - Bussystem und zu einem optimalen Echtzeitverhalten.

Vorteilhafte weitere Ausgestaltungen des Bussystems sind in den abhängigen Ansprüchen angegeben.

Es ist möglich, dass ein Versenden der Nachrichten in dem Bussystem doppelt prioritätsorientiert ausgeführt wird, bei welchem sowohl die Priorität der Nachricht als auch die Priorität der zugewiesenen Kommunikations-Ressource berücksichtigt wird.

Denkbar ist, dass die mindestens zwei Teilnehmerstationen zur statischen Kommunikation jeweils eine Kommunikationshardware und eine Kommunikationssoftware für eine Übertragung der Nachrichten über die Kommunikationsverbindung aufweisen, wobei die Kommunikationshardware, die Kommunikationssoftware und die Kommunikationsverbindung Einrichtungen zur statischen Kommunikation sind. Hierbei können die Einrichtungen zur statischen Kommunikation die mindestens eine Einrichtung zur dynamischen Kommunikation aufweisen.

In speziellen Ausgestaltungen ist das Bereitstellen des Bussystems die Auslieferung eines das Bussystem aufweisenden Produkts ist und/oder ist das Bussystem das Bussystem eines Fahrzeugs und/oder ist das Bussystem ein serielles Bussystem.

Gemäß einem Ausführungsbeispiel können die Nachrichten der dynamischen Kommunikation zumindest einen Teil der Nutzdaten der dynamischen Kommunikation als Identifizierer in den Nutzdaten der Nachrichten und/oder in einer vorbestimmten Anzahl von niederprioren Bits des Identifizierers aufweisen, der für die Nachricht der dynamischen Kommunikation vorgesehen ist.

Gemäß einem solchen Ausführungsbeispiel kann das Bussystem ein CAN oder CAN FD Bussystem sein, wobei die mindestens eine Einrichtung zur dynamischen Kommunikation zur Verwendung mindestens einen zuvor reservierten Identifizierers des CAN oder CAN FD Bussystems ausgestaltet ist, wobei jeder der zuvor reservierten Identifizierer maximal einer Teilnehmerstation zum Senden einer Nachricht zugeordnet ist, und wobei alle Teilnehmerstationen zum Empfang der zuvor reservierten Identifizierer ausgestaltet sind.

Gemäß einem weiteren Ausführungsbeispiel kann das Bussystem ein FlexRay-Bussystem sein, wobei die mindestens eine Einrichtung zur dynamischen Kommunikation zur Verwendung mindestens eines zuvor reservierten Zeitfensters des FlexRay-Bussystems ausgestaltet ist, wobei jedes der zuvor reservierten Zeitfenster maximal einer Teilnehmerstation zum Senden einer Nachricht zugeordnet ist, und wobei alle Teilnehmerstationen zum Empfang der Inhalte der zuvor reservierten Zeitfenster ausgestaltet sind.

Die zuvor genannte Aufgabe wird zudem durch eine Teilnehmerstation für ein Bussystem nach Patentanspruch 9 gelöst. Die Teilnehmerstation umfasst eine Kommunikationssteuereinrichtung zum Erstellen oder Lesen einer Nachricht für oder von eine/r weitere/n Teilnehmerstation des Bussystems, eine Sende-/Empfangseinrichtung zum Senden einer von der Kommunikationssteuereinrichtung erstellten Nachricht an und/oder Empfangen einer Nachricht von eine/r weitere/n Teilnehmerstation des Bussystems über eine Kommunikationsverbindung des Bussystems, und eine Einrichtung zur dynamischen Kommunikation zwischen der Teilnehmerstation und der weitere/n Teilnehmerstation, wobei die Kommunikationssteuereinrichtung und die Sende-/Empfangseinrichtung ausgestaltet sind zur statischen Kommunikation, die auf in dem Bussystem zu übermittelnde Nachrichten ausgerichtet ist, die bei Bereitstellen der Teilnehmerstation bekannt sind, und wobei dynamische Kommunikation auf in dem Bussystem zu übermittelnde Nachrichten ausgerichtet ist, die bei Bereitstellen der Teilnehmerstation nicht bekannt sind.

Die zuvor genannte Aufgabe wird zudem durch ein Verfahren zur Konfiguration eines statischen Bussystems mit mindestens zwei Teilnehmerstationen, die mit einer Kommunikationsverbindung des Bussystems verbunden sind, für eine dynamische Kommunikation nach Patentanspruch 10 gelöst. Bei dem Verfahren sind die mindestens zwei Teilnehmerstationen und die Kommunikationsverbindung ausgestaltet zur statischen Kommunikation, die auf in dem Bussystem zu übermittelnde Nachrichten ausgerichtet ist, die bei Bereitstellen des Bussystems bekannt sind und entsprechend festgelegten Sendern und Empfängern konfiguriert sind, wobei die dynamische Kommunikation auf in dem Bussystem zu übermittelnde Nachrichten ausgerichtet ist, die erst nach Bereitstellen der mindestens zwei Teilnehmerstationen und der Kommunikationsverbindung bekannt sind und entsprechend festgelegten Sendern und Empfängern konfiguriert sind, und wobei das Verfahren den Schritt aufweist: Vorsehen mindestens einer Einrichtung, die zur dynamischen Kommunikation zwischen den mindestens zwei Teilnehmerstationen des Bussystems ausgestaltet ist, für das Bussystem.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 eine Darstellung eines Aufbaus eines Rahmens bei dem Bussystem gemäß dem ersten Ausführungsbeispiel; und
Fig. 3 bis Fig. 6 zeigen jeweils in Bezug auf ein zweites Ausführungsbeispiel das Format von CAN FD Rahmen mit der Platzierung der zu prüfenden ersten vier Identifier Bits (ID28-ID25) und des Prüfungsbits RRS.

In den Figuren sind gleiche oder funktionsgleiche Elemente, sofern nichts anderes angegeben ist, mit denselben Bezugszeichen versehen.

### Erstes Ausführungsbeispiel

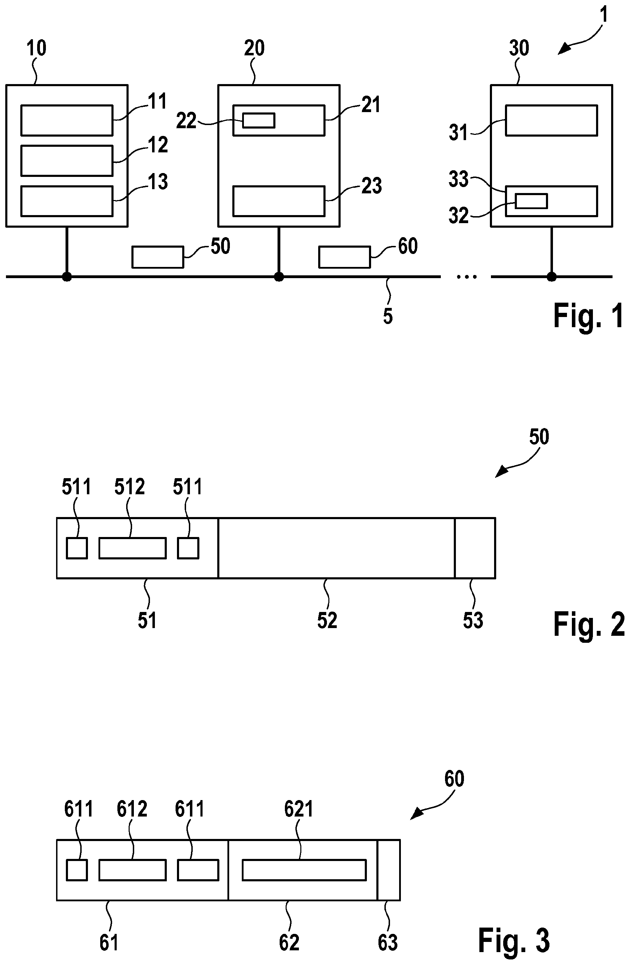

Fig. 1 zeigt in einem ersten Ausführungsbeispiel ein Bussystem 1, das beispielsweise ein CAN FD-Bussystem, sein kann. Das Bussystem 1 kann in einem Fahrzeug, insbesondere einem Kraftfahrzeug, einem Flugzeug, usw., oder im industriellen Bereich z.B. bei Steuerungsanlagen etc., oder im Krankenhaus usw. Verwendung finden.

In Fig. 1 hat das Bussystem 1 eine Kommunikationsverbindung 5, die eine Vielzahl von Teilnehmerstationen 10, 20, 30 verbindet. Über die Kommunikationsverbindung 5 können Rahmen oder Botschaften oder Nachrichten 50, 60 zwischen den einzelnen Teilnehmerstationen 10, 20, 30 übertragen werden. Die Kommunikationsverbindung 5 kann beispielsweise als drahtgebundene Busleitung oder als drahtlose Verbindung ausgeführt sein. Die Teilnehmerstationen 10, 20, 30 können beispielsweise Steuergeräte, Sensoren, Anzeigevorrichtungen, usw. eines Kraftfahrzeugs sein. Die Nachrichten 50 sind sogenannte statische Nachrichten, die Nachrichten 60 sind sogenannte dynamische Nachrichten.

Statische Nachrichten 50 reflektieren die Information(en), die zum Zeitpunkt des in Verkehr Bringens des Bussystems 1 in beispielsweise einem neuen Fahrzeug, Gebäude, usw. bekannt sind. Dieses Bekanntsein betrifft die Sender der Information(en) und die Darstellung der Information(en) auf dem Bussystem 1 sowie zumeist die Empfänger der Information(en). Die Daten, welche die zu übermittelnden oder übertragenden Information(en) mittels der Nachrichten 50 beschreiben, werden auch als Konfiguration bezeichnet. Die Konfiguration ist Teil der statischen Kommunikationssoftware des Bussystems 1, bei welcher genau festgelegt ist, welche Nachrichten 50 von welchen Sendern erstellt werden. Im Unterschied dazu reflektieren dynamische Nachrichten 60 alle die Information(en), die nach dem Zeitpunkt des in Verkehr Bringens des Bussystems 1 in beispielsweise einem neuen Fahrzeug, Gebäude, usw. bekannt werden.

Bei dem Bussystem 1 ist ganz allgemein die statische Kommunikation anhand einer Konfiguration des Bussystems 1 vorgesehen, die vor dem Inbetriebnahme des Bussystems 1 eingerichtet wurde, und die dynamische Kommunikation ist anhand einer Konfiguration des Bussystems 1 vorgesehen, die nach der Inbetriebnahme des Bussystems 1 eingerichtet wurde.

Wie in Fig. 1 gezeigt, hat die Teilnehmerstation 10 eine Kommunikationssteuereinrichtung 11, eine Einrichtung 12 zur dynamischen Kommunikation und eine Sende-/Empfangseinrichtung 13. Die Teilnehmerstation 20 hat dagegen eine Kommunikationssteuereinrichtung 21, die eine Einrichtung 22 zur dynamischen Kommunikation aufweist, und eine Sende-/Empfangseinrichtung 23. Die Teilnehmerstation 30 hat eine Kommunikationssteuereinrichtung 31 und eine Sende-/Empfangseinrichtung 33, welche eine Einrichtung 32 zur dynamischen Kommunikation aufweist. Die Sende-/Empfangseinrichtungen 13, 23, 33 der Teilnehmerstationen 10, 20, 30 sind jeweils direkt an die Kommunikationsverbindung 5 angeschlossen, auch wenn dies in Fig. 1 nicht dargestellt ist.

Die Kommunikationssteuereinrichtungen 11, 21, 31 dienen jeweils zur Steuerung einer Kommunikation der jeweiligen Teilnehmerstation 10, 20, 30 über die Kommunikationsverbindung 5 mit einer weiteren Teilnehmerstation der an die Kommunikationsverbindung 5 angeschlossenen Teilnehmerstationen 10, 20, 30. Die Kommunikationssteuereinrichtungen 11, 21, 31 können in Bezug auf die statische Kommunikation jeweils wie ein herkömmlicher CAN oder CAN FD Kontroller ausgeführt sein. Die Kommunikationssteuereinrichtungen 11, 21, 31 können jeweils auch als Teil eines Mikrocontrollers ausgebildet sein, welcher ebenfalls von der jeweiligen Teilnehmerstation 10, 20, 30 umfasst ist.

Die Sende-/Empfangseinrichtungen 13, 23, 33 senden oder empfangen die von der jeweils zugeordneten Kommunikationssteuereinrichtung 11, 21, 31 erstellten oder zu lesenden Nachrichten 50, 60. Die Sende-/Empfangseinrichtungen 13, 23, 33 können jeweils wie ein herkömmlicher CAN oder CAN FD Transceiver ausgeführt sein.

Die Einrichtungen 12, 22, 32 zur dynamischen Kommunikation können auch als Software-Module ausgeführt sein, welche einen Teil der auf der zugehörigen Teilnehmerstation 10, 20, 30 ablaufenden Software für die dynamische Kommunikation im Bussystem 1 bilden.

Fig. 2 zeigt den Aufbau einer statischen Nachricht 50. Die statische Nachricht 50 ist wie eine herkömmliche CAN oder CAN FD Nachricht aufgebaut. Die statische Nachricht 50 hat einen Datenkopf 51, Nutzdaten 52 und ein Schlussteil 53. Der Datenkopf 51 hat neben Steuerbits 511 einen Identifizierer 512, welcher die Nachricht 50 eindeutig der Teilnehmerstation 10, 20, 30 zuordnen lässt, welche die Nachricht 50 erstellt hat. Der Schlussteil 53 macht das Ende der Nachricht 50 kenntlich.

Die Nutzdaten 52 enthalten die Informationen, welche von einer der Teilnehmerstationen 10, 20, 30 an eine weitere der Teilnehmerstationen 10, 20, 30 über die Kommunikationsverbindung 5 übertragen werden sollen. Die Nutzdaten 52 haben Inhalte oder Informationen, die bei Bereitstellen des Bussystems 1 bekannt sind, wie bereits zuvor beschrieben. Beispielsweise könnten die Nutzdaten 52 Messwerte sein, welche ein Sensor als Teilnehmerstation 30 an ein Brems-Steuergerät als Teilnehmerstation 20 sendet. Hierbei ist bereits beim Bereitstellen des Bussystems 1 bekannt, dass der Sensor als Teilnehmerstation 30 im Normalbetrieb derartige Messwerte an das Brems-Steuergerät als Teilnehmerstation 20 senden wird.

Zudem sind die Kommunikationssteuereinrichtungen 11, 21, 31 und die Sende-/Empfangseinrichtungen 13, 23, 33 derart ausgestaltet, dass sie alle die Nachrichten 50 austauschen können, welche für die zugehörige Teilnehmerstation 10, 20, 30 von anderen Teilnehmerstationen 10, 20, 30 erstellt werden und welche für eine andere Teilnehmerstationen 10, 20, 30 erstellt werden.

Fig. 3 zeigt den Aufbau einer dynamischen Nachricht 60. Die dynamische Nachricht 60 ist vom Grundaufbau her wie eine herkömmliche CAN oder CAN FD Nachricht aufgebaut. Somit hat auch die dynamische Nachricht 60 einen Datenkopf 61, Nutzdaten 62 und ein Schlussteil 63. Der Datenkopf 61 hat neben Steuerbits 611 einen Identifizierer 612, welcher die Nachricht 60 eindeutig der Teilnehmerstation 10, 20, 30 zuordnen lässt, welche die Nachricht 60 erstellt hat. Der Schlussteil 63 macht das Ende der dynamischen Nachricht 60 kenntlich.

Die Nutzdaten 62 enthalten als weiteren Identifizierer oder Informationsidentifizierer 621 die Informationen, welche von einer der Teilnehmerstationen 10, 20, 30 an eine weitere der Teilnehmerstationen 10, 20, 30 über die Kommunikationsverbindung 5 übertragen werden sollen. Bei der dynamischen Nachricht 60 haben die Nutzdaten 62 Inhalte oder Informationen, die bei Bereitstellen des Bussystems 1 nicht bekannt sind. Beispielsweise könnten die Nutzdaten 62 Messwerte sein, welche ein später zum Bussystem hinzugefügter Sensor als Teilnehmerstation 30 an ein Anzeigegerät als Teilnehmerstation 10 und/oder ein Brems-Steuergerät als Teilnehmerstation 20 sendet. Hierbei ist also noch nicht beim Bereitstellen des Bussystems 1 bekannt, dass der Sensor als Teilnehmerstation 30 im Normalbetrieb derartige Messwerte an das Anzeigegerät als Teilnehmerstation 10 und/oder ein Brems-Steuergerät als Teilnehmerstation 20 senden wird.

Jeder dieser reservierten Identifizierer 612 ist maximal einer Teilnehmerstation der Teilnehmerstationen 10, 20, 30 zugewiesen, welche diesen reservierten Identifizierer zum Senden verwenden kann.

Die reservierten Identifizierer 612 zur dynamischen Kommunikation können von allen Sende-/Empfangseinrichtungen 13, 23, 33 bzw. Teilnehmerstationen 10, 20, 30 empfangen und von den Einrichtungen 12, 22, 32 zur dynamischen Kommunikation verwendet werden.

Somit sind die Inhalte der dynamischen Kommunikation, also die zwischen mindestens zwei der Teilnehmerstationen 10, 20, 30 zu übertragenden Informationen oder dynamischen Nutzdaten 62, durch die Informationsidentifizierer 621 identifiziert, welche Teil der Nutzdaten 62 einer dynamischen Nachricht 60 sind. Die Identifikation der dynamischen Kommunikation-Inhalte also der Nutzdaten 62 und die Identifikation der statisch bereit gestellten Kommunikationsressourcen über den Identifizierer 612 ist also unabhängig voneinander.

Für die Identifikation der über den Identifizierer 621 identifizierten Information(en) in den Nutzdaten 62 kann ein Service-orientiertes Protokoll, z.B. SOME/IP, oder eine Ableitung daraus zur Anwendung kommen. Das Service-orientierte Protokoll kann von der jeweiligen Einrichtung 12, 22, 32 zur dynamischen Kommunikation bei Empfang einer Nachricht 60 ausgeführt werden.

Die Einrichtungen 12, 22, 32 zur dynamischen Kommunikation sind bei dem vorliegenden Ausführungsbeispiel somit zur Verwendung von Identifizierern 612, 621als Kommunikationsressourcen ausgestaltet, die für die dynamische Kommunikation reserviert sind. Hierbei ist zum Zeitpunkt der Reservierung nicht bekannt, für welche Information diese Kommunikationsressourcen später verwendet werden. Die Einrichtungen 12, 22, 32 zur dynamischen Kommunikation können als Anwendungsprogramm (App) ausgeführt sein, welches später auf die entsprechende Teilnehmerstation 10, 20, 30 geladen wird, um die Nachrichten 60 zu erstellen und/oder zu lesen.

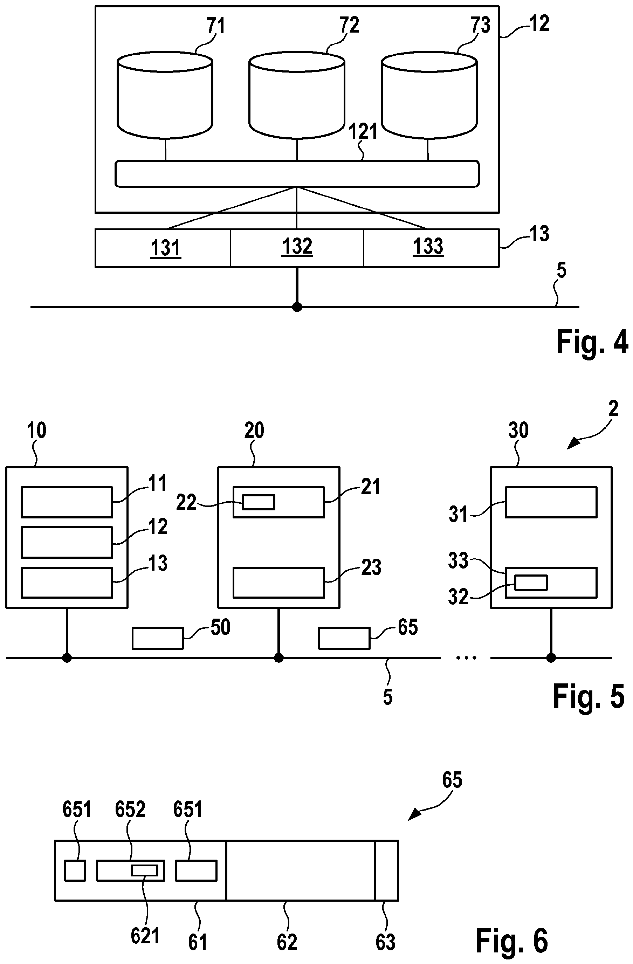

Wie in Fig. 4 gezeigt, ist es auch vorteilhaft, wenn die Einrichtung 12 zur dynamischen Kommunikation einen Service-Dispatcher 121 aufweist, welcher die zu sendenden Nachrichten 50, 60 gemäß der Priorität der zu sendenden Nachrichten 60 gruppiert. Die Einrichtungen 22, 32 zur dynamischen Kommunikation sind auf die gleiche Weise wie die Einrichtung 12 zur dynamischen Kommunikation aufgebaut.

Beispielsweise existieren drei Gruppen mit verschiedenen Prioritäten für zu sendende Information(en). In Fig. 4 hat eine erste Nachrichtengruppe 71 die höchste Priorität, eine zweite Nachrichtengruppe 72 mittlere Priorität und eine dritte Nachrichtengruppe 73 die niedrigste Priorität. Es kann eine beliebige Anzahl solcher priortätsorientierter Gruppen 71, 72, 73 geben.

Alternativ oder zusätzlich kann der Service-Dispatcher 121 die für die dynamische Kommunikation zugeordneten statischen Kommunikations-Ressourcen 131, 132, 133 auch nach ihrer Priorität betrachten. Hierfür können ebenfalls beispielsweise drei Kommunikations-Ressourcen 131, 132, 133 vorhanden sein, wobei die Kommunikations-Ressource 131 die höchste Priorität, die Kommunikations-Ressource 132 die mittlere Priorität und die Kommunikations-Ressource 133 die niedrigste Priorität hat. Wenn eine Kommunikations-Ressource 131, 132, 133 eine zu sendende Nachricht 60 zugeordnet bekommt, ist die Kommunikations-Ressource 131, 132, 133 zur Übertragung der Nachricht 60 so lange belegt, bis diese Nachricht 60 erfolgreich auf die Kommunikationsverbindung 5 gesendet wurde. Danach ist die Kommunikations-Ressource 131, 132, 133 wieder verfügbar.

Somit kann der Service-Dispatcher 121 entweder einfach oder doppelt prioritätsorientiert arbeiten. Demzufolge kann der Service-Dispatcher 121 die Nachrichten 60 gemäß ihrer Zuordnung zu der ersten bis dritten Nachrichtengruppe 71, 72, 73 versenden. Hierbei versendet der Service-Dispatcher 121 Nachrichten 60 mit niedriger Priorität nur dann, wenn keine Nachricht 60 mit höherer Priorität zur Versendung anstehen. Alternativ oder zusätzlich kann der Service-Dispatcher 121 immer die Kommunikations-Ressource 131, 132, 133 mit der höchsten Priorität verwenden, die verfügbar ist. Soll der Service-Dispatcher 121 nur einfach prioritätsorientiert arbeiten können, kann der Service-Dispatcher 121 entsprechend nur für die gewünschte Prioritätsorientierung ausgestaltet sein.

Fig. 5 zeigt ein Bussystem 2 gemäß einem zweiten Ausführungsbeispiel, bei welchem bei der dynamischen Kommunikation Nachrichten 65 versendet werden. Ansonsten ist das Bussystem 2 gemäß dem vorliegenden Ausführungsbeispiel auf die gleiche Weise aufgebaut, wie in Bezug auf das vorangehende Ausführungsbeispiel beschrieben. Somit werden nachfolgend nur die Unterschiede des Bussystems 2 zum Bussystem 1 beschrieben.

Fig. 6 zeigt eine dynamische Nachricht 65, welche in einem Bussystem 2 gemäß dem zweiten Ausführungsbeispiel versendet wird. Die Nachricht 65 ist ähnlich wie die Nachricht 60 von Fig. 3 aufgebaut. Somit hat auch die dynamische Nachricht 65 den Datenkopf 61, die Nutzdaten 62 und ein Schlussteil 63. Der Datenkopf 61 hat neben Steuerbits 651 einen Identifizierer 652, welcher die Nachricht 65 eindeutig der Teilnehmerstation 10, 20, 30 zuordnen lässt, welche die Nachricht 65 erstellt hat. Der Schlussteil 63 macht das Ende der dynamischen Nachricht 65 kenntlich.

Im Unterschied zur Nachricht 60 ist jedoch bei der Nachricht 65 der Identifizierer 652 aufgeteilt in 2 Teile, wobei ein Teil für die Identifikation und ein Teil, nämlich in Form des Informationsidentifizierers 621, für den Transport von Nutzdaten 62 verwendet wird.

Beispielsweise können bei Ausführung des Bussystems 2 als CAN-Bus die 11-Bit-Identifier für die statische Kommunikation verwendet werden, also für die Versendung der Nachrichten 50. Dagegen werden die 29-Bit-Identifizierer für die dynamische Kommunikation, also für die Versendung der Nachrichten 65, verwendet. Dies kann so geschehen, dass die 18 letzten Bits des 29-Bit-Identifizierers als Teil für den Informationsidentifizierer 621 und damit für den Transport von Nutzdaten 62 herangezogen werden. Die Identifikation und Zuordnung der statisch zugewiesenen Kommunikationsressourcen erfolgt dann durch die ersten 11 Bits des Identifizierers 652.

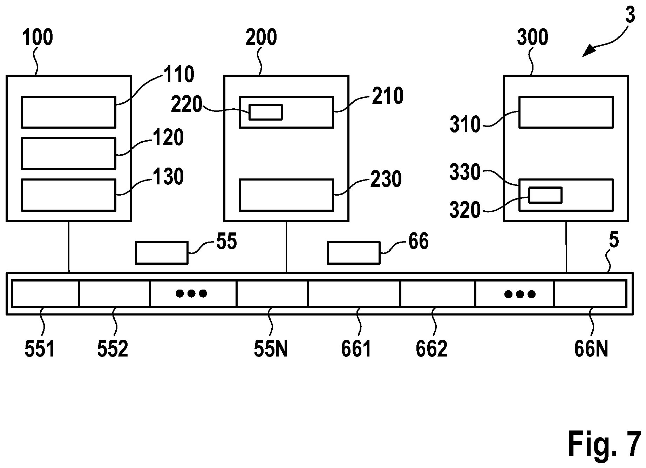

Eine derartige Ausführung der dynamischen Nachricht 65 sowie die dazugehörige Ausführung der Teilnehmerstationen 10, 20, 30 und der Kommunikationsverbindung 5 zum Erstellen, Übertragen und Empfangen der dynamischen Nachricht 70 ist besonders auf Bussystemen 2 mit einer kleinen Nutzdatenanzahl von Vorteil. Da der Identifier 652 die statischen Kommunikationsressourcen ganz oder teilweise für die Identifikation der dynamischen Kommunikationsinhalte oder einen Teil der eigentlichen Nutzdaten 62 mitbenutzt wird, können die Nutzdaten 62 anderweitig verwendet werden. Fig. 7 zeigt ein Bussystem 3 gemäß einem dritten Ausführungsbeispiel. Das Bussystem 3 arbeitet auf der Grundlage des FlexRay Standards, der in dem ISO-Standard ISO 17458-1 bis 17458-5 festgelegt ist. Somit sind für statische Nachrichten 55 eine Anzahl von Slots oder Zeitschlitzen 551 bis 55N vorgesehen.

Zudem werden bei dem Bussystem 3 für die dynamische Kommunikation, anstelle von den Identifizierern 612, 621, 652 (Fig. 3, Fig. 5), für dynamische Nachrichten 66 eine vorbestimmte Anzahl von Slots oder Zeitschlitzen 661 bis 66N reserviert. Jeder dieser reservierten Zeitschlitze 661 bis 66N wird dann maximal einer Teilnehmerstation 10, 20, 30 zugewiesen, welche diesen zum Senden verwenden kann. Die Inhalte der Zeitschlitze 661 bis 66N können von allen Teilnehmerstation 100, 200, 300 empfangen werden.

Wie in Fig. 7 gezeigt, hat die Teilnehmerstation 100 eine Kommunikationssteuereinrichtung 110, eine Einrichtung 120 zur dynamischen Kommunikation und eine Sende-/Empfangseinrichtung 130. Die Teilnehmerstation 200 hat dagegen eine Kommunikationssteuereinrichtung 210, die eine Einrichtung 220 zur dynamischen Kommunikation aufweist, und eine Sende-/Empfangseinrichtung 230. Die Teilnehmerstation 300 hat eine Kommunikationssteuereinrichtung 310 und eine Sende-/Empfangseinrichtung 330, welche eine Einrichtung 320 zur dynamischen Kommunikation aufweist. Die Sende-/Empfangseinrichtungen 130, 230, 330 der Teilnehmerstationen 100, 200, 300 sind jeweils direkt an die Kommunikationsverbindung 5 angeschlossen, auch wenn dies in Fig. 7 nicht dargestellt ist.

Die Kommunikationssteuereinrichtungen 110, 120, 130 haben bis auf ihre Ausgestaltung für den FlexRay Standard dieselbe Funktion wie die Kommunikationssteuereinrichtungen 11, 12, 13 bei den vorangehenden Ausführungsbeispielen. Die Sende-/Empfangseinrichtungen 110, 120, 130 haben bis auf ihre Ausgestaltung für den FlexRay Standard dieselbe Funktion wie die Sende-/Empfangseinrichtungen 11, 12, 13 bei den vorangehenden Ausführungsbeispielen. Ebenso haben die Einrichtungen 120, 220, 320 zur dynamischen Kommunikation bis auf ihre Ausgestaltung für den FlexRay Standard dieselbe Funktion wie die Einrichtungen 12, 22, 32 zur dynamischen Kommunikation bei den vorangehenden Ausführungsbeispielen.

Ansonsten ist das Bussystem 3 auf die gleiche Weise aufgebaut, wie bei den vorangehenden Ausführungsbeispielen beschrieben.

Alle zuvor beschriebenen Ausgestaltungen des Bussystems 1, 2, 3, der Teilnehmerstationen 10, 20, 30, 100, 200, 300 und des im Bussystem 1, 2, 3 ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert oder weggelassen werden. Zusätzlich sind insbesondere folgende Modifikationen denkbar.

Die zuvor beschriebenen Bussysteme 1, 2 gemäß dem ersten und zweiten Ausführungsbeispiel ist anhand eines auf dem CAN oder CAN FD Protokoll basierenden Bussystems beschrieben. Das Bussystem 1 gemäß den Ausführungsbeispielen kann jedoch auch eine andere Art von Kommunikationsnetz sein. Es ist vorteilhaft, jedoch nicht zwangsläufige Voraussetzung, dass bei dem Bussystem 1, 2 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10 bis 30 in den Bussystemen 1, 2 des ersten und zweiten Ausführungsbeispiels ist beliebig. Insbesondere können auch nur Teilnehmerstationen 10 oder 20 oder 30 in dem Bussystem 1 oder 2 vorhanden sein. Es sind beliebige Kombinationen der Teilnehmerstationen 10 bis 30 in den Bussystemen 1, 2 möglich. Das Gleiche gilt für die Teilnehmerstationen 100 bis 300 in dem Bussystem 3.

Im Sinne der Erfindung kann der Service-Dispatcher 121 die Zuordnung der Nachrichten 50, 60 zur Kommunikation-Ressource auch nach einer anderen Logik durchführen als der im Zusammenhang mit Fig. 4 beschriebenen. Wichtig hierbei ist nur, dass der Service-Dispatcher 121 die Nachrichten 50, 60 auf bereit gestellten Kommunikations-Ressourcen 131, 132, 133 versendet.

Anstelle mindestens einen Identifizierers 612, 621 einer über den Bus gesendeten Nachricht 50, 60, 70, oder einer entsprechenden Verwendung eines Zykluszählers (Cycle-Counter), wie zuvor in Bezug auf die Ausführungsbeispiele beschrieben, können bei einem anderen Bussystem auch Anschlussadressen (Port-Adressen) vorgehalten werden, um eine dynamische Kommunikation auf einem zunächst statischen Bussystem zu ermöglichen.

## Patentansprüche

1. Bussystem (1; 2), mit
mindestens zwei Teilnehmerstationen (10; 20; 30),
einer Kommunikationsverbindung (5) zur Verbindung der mindestens zwei Teilnehmerstationen (10; 20; 30) miteinander, und
mindestens einer Einrichtung (12; 22; 32) zur dynamischen Kommunikation zwischen den mindestens zwei Teilnehmerstationen (10; 20; 30) des Bussystems (1; 2),
wobei die mindestens zwei Teilnehmerstationen (10; 20; 30) und die Kommunikationsverbindung (5) ausgestaltet sind zur statischen Kommunikation, die auf in dem Bussystem (1; 2) zu übermittelnde Nachrichten (50; 55) ausgerichtet ist, die bei Bereitstellen des Bussystems (1; 2) bekannt sind und entsprechend festgelegten Sendern und Empfängern konfiguriert sind, und wobei die dynamische Kommunikation auf in dem Bussystem (1; 2) zu übermittelnde dynamische Nachrichten (60; 65) ausgerichtet ist, die erst nach Bereitstellen der mindestens zwei Teilnehmerstationen (10; 20; 30) und der Kommunikationsverbindung (5) bekannt sind,
wobei das Bussystem (1; 2) ein CAN oder CAN FD Bussystem ist, und
wobei die mindestens eine Einrichtung (12, 22, 32) zur dynamischen Kommunikation zur Verwendung mindestens eines zuvor reservierten Identifizierers (612; 652) des CAN oder CAN FD Bussystems ausgestaltet ist, **dadurch gekennzeichnet, dass** der zuvor reservierte Identifizierer (612; 652) als Kommunikationsressource für die dynamische Kommunikation reserviert ist,
wobei jeder der zuvor reservierten Identifizierer (612; 652) maximal einer Teilnehmerstation (10, 20, 30) zum Senden einer dynamischen Nachricht (60; 65) zugeordnet ist,
wobei alle Teilnehmerstationen (10, 20, 30) zum Empfang der zuvor reservierten Identifizierer (612; 652) ausgestaltet sind,
wobei die Inhalte der dynamischen Kommunikation, also die zu übertragenden dynamischen Nutzdaten (62), durch Informationsidentifizierer (621) identifiziert sind, welche Teil der Nutzdaten (62) der dynamischen Nachricht (60;65) oder Teil des zuvor reservierten Identifizierers (652) sind,
so, dass die Identifikation der dynamischen Kommunikations-Inhalte oder dynamischen Nutzdaten (62) über den Informationsidentifizierer (621) erfolgt und die Identifikation der Kommunikationsressourcen über den zuvor reservierten Identifizierer (612; 652) unabhängig davon erfolgt.

2. Bussystem (1; 2) nach Anspruch 1, wobei die Einrichtung (12; 22; 32) zur dynamischen Kommunikation einen Service-Dispatcher (121) aufweist, welcher die zu sendenden Nachrichten (50, 60; 50, 65) gemäß der Priorität der zu sendenden dynamischen Nachrichten (60; 65) gruppiert.

3. Bussystem (1; 2) nach Anspruch 1 oder 2, wobei ein Versenden der Nachrichten (50, 60; 50, 65) in dem Bussystem doppelt prioritätsorientiert ausgeführt wird, bei welchem sowohl die Priorität der Nachricht (50, 60; 50, 65) als auch die Priorität einer zugewiesenen Kommunikations-Ressource (131, 132, 133) berücksichtigt wird.

4. Bussystem (1; 2) nach Anspruch 1, 2 oder 3,
wobei die mindestens zwei Teilnehmerstationen (10; 20; 30) zur statischen Kommunikation jeweils eine Kommunikationshardware und eine Kommunikationssoftware für eine Übertragung der Nachrichten (50, 60; 50, 65) über die Kommunikationsverbindung (5) aufweisen,
wobei die Kommunikationshardware, die Kommunikationssoftware und die Kommunikationsverbindung (5) Einrichtungen zur statischen Kommunikation sind.

5. Bussystem (1; 2) nach Anspruch 4, wobei die Einrichtungen zur statischen Kommunikation die mindestens eine Einrichtung zur dynamischen Kommunikation (22, 32) umfassen.

6. Bussystem (1; 2; 3) nach einem der vorangehenden Ansprüche,
wobei das Bereitstellen des Bussystems (1; 2; 3) die Auslieferung eines das Bussystem (1; 2; 3) aufweisenden Produkts ist, und/oder
wobei das Bussystem (1; 2; 3) das Bussystem eines Fahrzeugs ist, und/oder
wobei das Bussystem (1; 2; 3) ein serielles Bussystem ist.

## Claims

1. Bus system (1; 2) having
at least two subscriber stations (10; 20; 30),
a communication connection (5) for connecting the at least two subscriber stations (10; 20; 30) to one another, and
at least one device (12; 22; 32) for dynamic communication between the at least two subscriber stations (10; 20; 30) of the bus system (1; 2),
wherein the at least two subscriber stations (10; 20; 30) and the communication connection (5) are configured for static communication oriented to messages (50; 55) which are to be transmitted in the bus system (1; 2), are known when providing the bus system (1; 2) and are configured according to defined transmitters and receivers, and
wherein the dynamic communication is oriented to dynamic messages (60; 65) which are to be transmitted in the bus system (1; 2) and are known only after the at least two subscriber stations (10; 20; 30) and the communication connection (5) have been provided,
wherein the bus system (1; 2) is a CAN or CAN FD bus system, and
wherein the at least one device (12, 22, 32) for dynamic communication is configured to use at least one previously reserved identifier (612; 652) of the CAN or CAN FD bus system,
**characterized in that**
the previously reserved identifier (612; 652) is reserved as a communication resource for dynamic communication,
wherein each of the previously reserved identifiers (612; 652) is assigned to at most one subscriber station (10, 20, 30) for transmitting a dynamic message (60; 65),
wherein all subscriber stations (10, 20, 30) are configured to receive the previously reserved identifiers (612; 652),
wherein the contents of dynamic communication, that is to say the dynamic useful data (62) to be transmitted, are identified by information identifiers (621) which are part of the useful data (62) of the dynamic message (60; 65) or part of the previously reserved identifier (652),
with the result that the dynamic communication contents or dynamic useful data (62) are identified via the information identifier (621) and the communication resources are identified independently thereof via the previously reserved identifier (612; 652).

2. Bus system (1; 2) according to Claim 1, wherein the device (12; 22; 32) for dynamic communication has a service dispatcher (121) which groups the messages (50, 60; 50, 65) to be transmitted according to the priority of the dynamic messages (60; 65) to be transmitted.

3. Bus system (1; 2) according to Claim 1 or 2, wherein the messages (50, 60; 50, 65) are transmitted in the bus system in a dual priority-oriented manner, in which both the priority of the message (50, 60; 50, 65) and the priority of an allocated communication resource (131, 132, 133) are taken into account.

4. Bus system (1; 2) according to Claim 1, 2 or 3,
wherein the at least two subscriber stations (10; 20; 30) for static communication each have communication hardware and communication software for transmitting the messages (50, 60; 50, 65) via the communication connection (5),
wherein the communication hardware, the communication software and the communication connection (5) are devices for static communication.

5. Bus system (1; 2) according to Claim 4, wherein the devices for static communication comprise the at least one device (22, 32) for dynamic communication.

6. Bus system (1; 2; 3) according to one of the preceding claims,
wherein the provision of the bus system (1; 2; 3) is the delivery of a product having the bus system (1; 2; 3), and/or
wherein the bus system (1; 2; 3) is the bus system of a vehicle, and/or
wherein the bus system (1; 2; 3) is a serial bus system.

## Revendications

1. Système de bus (1 ; 2), comprenant
au moins deux stations d'abonné (10 ; 20 ; 30),
une liaison de communication (5) destinée à relier les au moins deux stations d'abonné (10 ; 20 ; 30) l'une avec l'autre et
au moins un dispositif (12 ; 22 ; 32) servant à la communication dynamique entre les au moins deux stations d'abonné (10 ; 20 ; 30) du système de bus (1 ; 2),
les au moins deux stations d'abonné (10 ; 20 ; 30) et la liaison de communication (5) étant configurées pour une communication statique, qui est orientée sur les messages (50 ; 55) à communiquer dans le système de bus (1 ; 2), lesquels sont connus lors de la mise à disposition du système de bus (1 ; 2) et sont configurés conformément à des émetteurs et des récepteurs définis en conséquence, et
la communication dynamique étant orientée sur les messages dynamiques (60 ; 65) à communiquer dans le système de bus (1 ; 2), qui ne sont connus qu'après la mise à disposition des au moins deux stations d'abonné (10 ; 20 ; 30) et de la liaison de communication (5),
le système de bus (1 ; 2) étant un système de bus CAN ou CAN FD et
l'au moins un dispositif (12, 22, 32) servant à la communication dynamique étant configuré pour utiliser au moins un identificateur (612 ; 652) préalablement réservé du système de bus CAN ou CAN FD,
**caractérisé en ce que**
l'identificateur (612 ; 652) préalablement réservé est réservé en tant que ressource de communication pour la communication dynamique,
chacun des identificateurs (612 ; 652) préalablement réservés étant associé au maximum à une station d'abonné (10, 20, 30) en vue de l'envoi d'un message dynamique (60 ; 65),
toutes les stations d'abonné (10, 20, 30) étant configurées pour la réception de l'identificateur (612 ; 652) préalablement réservé,
les contenus de la communication dynamique, c'est-à-dire les données utiles dynamiques (62) à transmettre, étant identifiés par des identificateurs d'information (621) qui font partie de données utiles (62) du message dynamique (60 ; 65) ou font partie de l'identificateur (652) préalablement réservé,
de sorte que l'identification des contenus de la communication dynamique ou des données utiles dynamiques (62) s'effectue par le biais des identificateurs d'information (621) et l'identification des ressources de communication s'effectue indépendamment de cela par le biais des identificateurs (612 ; 652) préalablement réservés.

2. Système de bus (1 ; 2) selon la revendication 1, le dispositif (12 ; 22 ; 32) servant à la communication dynamique possédant un répartiteur de service (121) qui groupe les messages (50, 60 ; 55, 65) à envoyer en fonction de la priorité des messages dynamiques (60 ; 65) à envoyer.

3. Système de bus (1 ; 2) selon la revendication 1 ou 2, un envoi des messages (50, 60 ; 50, 65) dans le système de bus étant exécuté en fonction d'une double priorité avec laquelle sont prises en compte à la fois la priorité du message (50, 60 ; 50, 65) ainsi que la priorité d'une ressource de communication (131, 132, 133) attribuée.

4. Système de bus (1 ; 2) selon la revendication 1, 2 ou 3, les au moins deux stations d'abonné (10 ; 20 ; 30) possédant respectivement, pour la communication statique, un matériel de communication et un logiciel de communication pour une transmission des messages (50, 60 ; 50, 65) par le biais de la liaison de communication (5), le matériel de communication, le logiciel de communication et la liaison de communication (5) étant des dispositifs servant à la communication statique.

5. Système de bus (1 ; 2) selon la revendication 4, les dispositifs servant à la communication statique comprenant l'au moins un dispositif servant à la communication dynamique (22, 32).

6. Système de bus (1 ; 2 ; 3) selon l'une des revendications précédentes, la mise à disposition du système de bus (1 ; 2 ; 3) étant la livraison d'un produit qui possède le système de bus (1 ; 2 ; 3) et/ou le système de bus (1 ; 2 ; 3) étant le système de bus d'un véhicule et/ou le système de bus (1 ; 2 ; 3) étant un système de bus série.
